# EUROPÄISCHE PATENTANMELDUNG

(11) **EP 0 832 793 A2**
(43) Veröffentlichungstag der Anmeldung: **01.04.1998**
(21) Anmeldenummer: 97115100.6
(22) Anmeldetag: 01.09.1997
(51) Int. Cl.: B60R 21/20

(54) **Mit Schnapp-Verbindung arretierbare Gassack-Abdeckung**

(30) Priorität: 27.09.1996 DE 29616909 U
(71) Anmelder: TRW Occupant Restraint Systems GmbH, 73551 Alfdorf (DE)
(72) Erfinder: Fischer, Anton, 76829 Leinsweiler (DE)
(74) Vertreter: Kitzhofer, Thomas, Dipl.-Ing.

(57) **Zusammenfassung**

Eine Gassack-Abdeckung mit wenigstens einem von einer Außenwandung (7) abstehenden, an diesem angeformten Befestigungssteg (13), der einen Teil einer Schnapp-Verbindung (15) aufweist, mit der die Abdeckung (1) an einem Fahrzeugteil arretiert werden kann, ist dadurch gekennzeichnet, daß die Schnapp-Verbindung (15) eine einteilige, auslenkbare Steckzunge (19) aus Federblech aufweist, die am Befestigungssteg (13) arretiert ist und in montiertem Zustand das Fahrzeugteil hintergreift.

## Beschreibung

Die Erfindung betrifft eine Gassack-Abdeckung mit wenigstens einem von einer Außenwandung abstehenden, an diesem angeformten Befestigungssteg, der einen Teil einer Schnapp-Verbindung aufweist, mit der die Abdeckung an einem Fahrzeugteil arretiert werden kann.

Eine gattungsgemäße Gassack-Abdeckung ist aus der EP 0 669 230 A1 bekannt. Diese weist eine den Gassack verdeckende Außenwandung auf, von der innenseitig mehrere einstückig mit der Außenwandung verbundene Befestigungsstege abstehen. Diese bestehen aus Kunststoff und weisen hakenförmige Enden auf, die bei montierter Abdeckung ein Fahrzeugteil hintergreifen. Die so geschaffenen Schnapp-Verbindungen erlauben eine schnelle Montage der Abdeckung. Beim Entfalten des Gassacks, wenn die Abdeckung, je nach Ausführungsform, entweder aufgeklappt wird oder aufreißt, muß ausgeschlossen sein, daß sich die Schnapp-Verbindung, wo es nicht gewünscht ist, löst, damit nicht Einzelteile in Richtung Fahrzeuginsasse geschleudert werden.

Die Erfindung schafft eine Gassack-Abdeckung, bei der die gerade geschilderten Situationen mit einfachen Mitteln ausgeschlossen werden können. Dies wird bei einer Gassack-Abdeckung der eingangs genannten Art erfindungsgemäß dadurch erreicht, daß die Schnapp-Verbindung eine einteilige, auslenkbare Steckzunge aus Federblech aufweist, die am Befestigungssteg arretiert ist und in montiertem Zustand ein Fahrzeugteil hintergreift. Durch Vorsehen eines Federblechs wird verhindert, daß der am Befestigungssteg arretierte Teil der Schnapp-Verbindung bei Zugbelastung abgeschert wird, wie dies bei Kunststoffteilen der Fall sein kann. Dadurch kann die Schnapp-Verbindung eine geringere Baugröße aufweisen als bislang übliche.

Eei der bevorzugten Ausführungsform weist die Steckzunge ein vom Befestigungssteg abstehendes Ende mit wenigstens einem seitlich nach außen abstehenden hakenförmig gebogenen Abschnitt auf.

Die Steckzunge kann dabei ein Befestigungsende umfassen, das die Form einer U-förmig gebogenen Platte hat, die zwischen ihren Schenkeln den Befestigungssteg aufnimmt. Dadurch kann die von der Schnapp-Verbindung aufgenommene Zugkraft großflächig in den Befestigungssteg eingeleitet werden.

Eine formschlüssige Verbindung der Steckzunge mit dem Befestigungssteg ist beispielsweise dadurch möglich, daß die Steckzunge wenigstens eine Öffnung aufweist, die quer zur Richtung der von der Schnapp-Verbindung beim Entfalten des Gassacks aufzunehmenden Zugkraft verläuft, durch die sich ein Vorsprung des Befestigungsstegs erstreckt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht der erfindungsgemäßen Abdeckung in eingebautem Zustand; und
- Figur 2 eine Schnittansicht nach der Linie II-II in Figur 1.

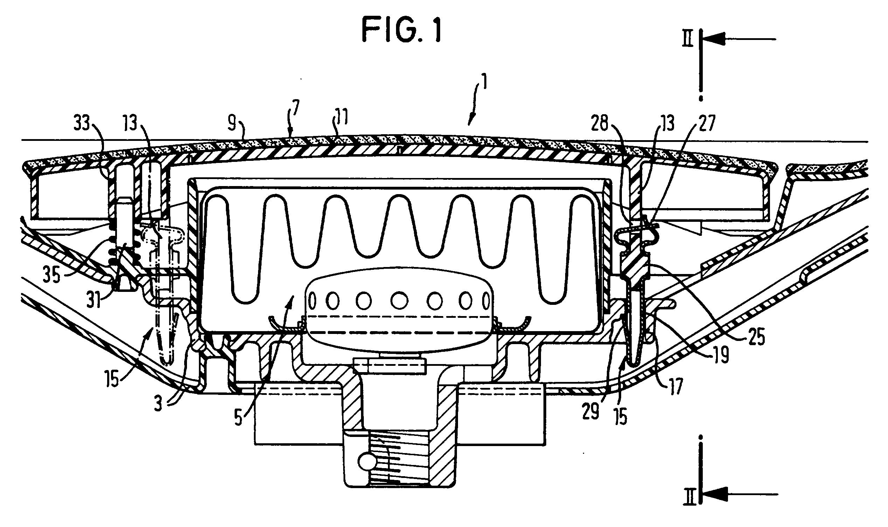

In Figur 1 ist eine zweikomponentige Abdeckung 1 für ein in einer Lenkradnabe 3 integriertes Gassackmodul 5 dargestellt. Die Abdeckung 1 umfaßt eine Außenwandung 7 mit einer an die Oberflächenstruktur und Farbe des Lenkradkranzes angepaßten Außenschicht 9 sowie einer stabilen Trägerschicht 11 in Form eines gespritzten Kunststoffteils. An der Trägerschicht sind zwei parallele Befestigungsstege 13 angespritzt, die von der Außenwandung 7 annähernd rechtwinkelig abstehen.

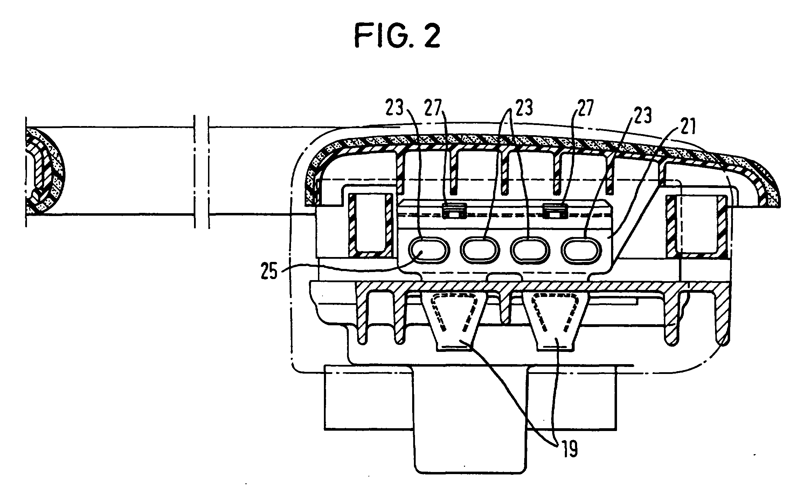

Die Abdeckung 1 wird durch mehrere Schnapp-Verbindungen 15 an der Lenkradnabe 3 befestigt. Jede Schnapp-Verbindung 15 umfaßt eine schlitzartige Öffnung 17 in der Lenkradnabe 3, in die sich in eingebautem Zustand der Abdeckung 1 jeweils eine Steckzunge 19 aus Federblech erstreckt. Wie in Figur 2 zu erkennen ist, sind pro Befestigungssteg 13 zwei Steckzungen 19 vorgesehen, wobei die Steckzungen 19 an ihrem dem Befestigungssteg 13 zugewandten Befestigungsende 21 ineinander übergehen.

Im Schnitt gesehen hat das Befestigungsende 21 die Form einer U-förmig gebogenen Platte, deren Schenkel zwischen sich den Befestigungssteg 13 aufnehmen und mehrere längliche Öffnungen 23 aufweisen. Die die Öffnungen 23 umschließende Berandung ist nach außen gebogen. Am Befestigungssteg 13 sind entsprechend geformte Vorsprünge 25 vorgesehen, die sich durch die Öffnungen 23 erstrecken. Dadurch werden die Steckzungen 19 formschlüssig am Befestigungssteg 13 arretiert. Als zusätzliche Sicherung weist ein freies Ende eines Schenkels der U-förmig gebogenen Steckzunge oberhalb jeder Steckzunge 19 eine Lasche 27 auf, die sich durch eine Öffnung 28 im Befestigungssteg 13 erstreckt.

Am unteren Ende jeder Steckzunge 19 weist diese einen seitlich nach außen abstehenden, gebogenen Abschnitt 29 auf, der der Steckzunge 19 im Pereich des unteren Endes die Form eines Hakens gibt. Mit diesem seitlich abstehenden Abschnitt 29 hintergreift jede Steckzunge 19 die Berandung der zugeordneten Öffnung 17 an der Lenkradnabe 3. Die zu einem Teil zusammengefaßten Steckzungen 19 werden zur Fixierung am Befestigungssteg 13 einfach von unten auf diesen aufgesteckt, so daß sich der Befestigungssteg 13 zwischen die Schenkel im Bereich des Befestigungsendes 21 schiebt, bis die Vorsprünge 25 in die Öffnungen 23 und die Schenkel 27 in die Öffnungen 28 einrasten.

Die Montage der Abdeckung 1 an der Lenkradnabe 3 erfolgt durch Andrücken der Abdeckung 1 an die Lenkradnabe 3, wobei die Steckzungen 19 mit ihrem unteren Ende durch die Öffnungen 17 geschoben werden und dabei der nach außen gebogene Abschnitt 29 einwärts gedrückt wird, bis er die Öffnung 17 passiert hat und nach außen in die in Figur 1 gezeigte Stellung zurückschnappt.

Ein an der Lenkradnabe 3 angeformter Führungsstift 31 dringt bei der Montage der Abdeckung 1 in eine an dieser angeformte rohrförmige Führung 33 ein. Eine den Führungsstift 31 umgebende Druckfeder 35 drückt stirnseitig gegen die Führung 33 und damit die Abdeckung 1 nach außen in eine definierte Ruhestellung, in der das stirnseitige Ende des Abschnitts 29 an der Unterseite der Berandung der Öffnung 17 mit einer Vorspannung anliegt, so daß Klappergeräusche während des Fahrbetriebs, die durch eine mit Spiel versehene Schnapp-Verbindung entstehen könnten, vermieden werden.

Beim Aufreißen der Abdeckung 1 während des Entfaltens des Gassacks wird die auf die Abdeckung 1 im Bereich der Außenwandung 7 in sie eingeleitete Kraft über die Befestigungsstege 13 großflächig in die Steckzungen 19 eingeleitet, die sich an der Lenkradnabe 3 abstützen. Ein Herausreißen der Abdeckung 1 aus ihrer so gebildeten Verankerung kann aufgrund der vorgesehenen stabilen Schnapp-Verbindung ausgeschlossen werden.

## Patentansprüche

1. Gassack-Abdeckung mit wenigstens einem von einer Außenwandung (7) abstehenden, an diesem angeformten Befestigungssteg (13), der einen Teil einer Schnapp-Verbindung (15) aufweist, mit der die Abdeckung (1) an einem Fahrzeugteil arretiert werden kann, dadurch gekennzeichnet, daß die Schnapp-Verbindung (15) eine einteilige, auslenkbare Steckzunge (19) aus Federblech aufweist, die am Befestigungssteg (13) arretiert ist und in montiertem Zustand das Fahrzeugteil hintergreift.

2. Gassack-Abdeckung nach Anspruch 1, dadurch gekennzeichnet, daß die Steckzunge (19) ein vom Befestigungssteg (13) abstehendes Ende mit wenigstens einem seitlich nach außen abstehenden hakenförmig gebogenen Abschnitt (29) aufweist.

3. Gassack-Abdeckung nach Anspruch 1 oder 2, dadurch gekennzeichnet, daß die Steckzunge (19) ein Befestigungsende (21) aufweist, das die Form einer U-förmig gebogenen Platte hat und zwischen ihren Schenkeln den Befestigungssteg (13) aufnimmt.

4. Gassack-Abdeckung nach Anspruch 3, dadurch gekennzeichnet, daß mehrere Steckzungen (19) einstückig miteinander verbunden sind.

5. Gassack-Abdeckung nach einem der vorstehenden Ansprüche, dadurch gekennzeichnet, daß die Steckzunge (19) formschlüssig mit dem Befestigungssteg (13) verbunden ist.

6. Gassack-Abdeckung nach Anspruch 5, dadurch gekennzeichnet, daß die Steckzunge (19) wenigstens eine Öffnung (23) aufweist, die quer zur Richtung der von der Schnapp-Verbindung beim Entfalten des Gassacks aufzunehmenden Zugkraft verläuft, und daß sich ein Vorsprung (25) des Befestigungsstegs (13) durch die Öffnung (23) erstreckt.

7. Gassack-Abdeckung nach einem der vorstehenden Ansprüche, dadurch gekennzeichnet, daß ein Befestigungsende (21) der Steckzunge (19), mit der dies am Befestigungssteg (13) arretiert ist, wenigstens eine seitlich abgewinkelte Lasche (27) aufweist, die sich durch eine Öffnung (28) im Befestigungssteg (13) erstreckt.
